# EUROPÄISCHE PATENTSCHRIFT

(11) **EP 0 975 493 B1**
(45) Veröffentlichungstag und Bekanntmachung des Hinweises auf die Patenterteilung: **18.08.2004**
(21) Anmeldenummer: 99914425.6
(22) Anmeldetag: 18.02.1999
(51) Int. Cl.: B60S 1/04

(54) **WISCHERTRÄGER**
WIPER SUPPORT
SUPPORT D'ESSUIE-GLACE

(30) Priorität: 19.02.1998 DE 19806855
(43) Veröffentlichungstag der Anmeldung: 02.02.2000
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/000443
(87) Internationale Veröffentlichungsnummer: WO 1999/042345

(56) Entgegenhaltungen:
- EP-A- 0 409 944
- EP-A- 0 694 455
- DE-A- 19 540 869

## Beschreibung

### Stand der Technik

Die Erfindung geht aus von einem Wischerträger nach dem Oberbegriff des Anspruchs 1.

Wischeranlagen für Kraftfahrzeuge werden mit einem Wischerträger, einer sogenannten Platine, an der Karosserie eines Kraftfahrzeugs befestigt. Die Platine trägt einen Wischerantrieb mit einem Wischermotor, dessen Motorwelle über Gelenkstangen Kurbeln antreibt, die mit einer Antriebswelle für jeden Scheibenwischer fest verbunden sind. Die Antriebswelle ist in einem Wischerlager gelagert, dessen Lagergehäuse an der Platine befestigt ist. Der Wischerträger ist unmittelbar über die Wischerlager oder über Befestigungsaugen, die am Wischerlager, an dem Wischerträger und/oder einem Motorträger angeformt sind, an einer Fahrzeugkarosserie befestigt.

Aus der DE-U 74 34 119 ist ein gattungsgemäβer Wischerträger bekannt, der aus einem Vierkantrohr hergestellt ist, an das eine als Motorträger dienende Platte angeschweißt ist. Derartige Wischerträger, oft als Rohrplatinen oder Rohrrahmenanlagen bezeichnet, zeichnen sich durch eine leichte Bauweise bei großer Stabilität aus. Aus Kostengründen wird ein gerades Trägerrohr angestrebt, da kein Vorbiegearbeitsgang erforderlich ist. Die gerade Rohrausführung hat in Axialrichtung eine hohe Steifigkeit, was sich zwar im Normalbetrieb der Wischanlage positiv auswirkt, jedoch im Blockierfall oder bei Schneelast Nachteile hat, da aufgrund der geringen Elastizität des Rohres die anderen Komponenten des Wischsystems, wie Wischerlager oder Wischhebel, stark belastet sind. Sie müssen daher verstärkt ausgelegt werden. Die dadurch entstehenden höheren Kosten gleichen den Kostenvorteil des geraden Rohrs aus oder übertreffen ihn sogar.

Es ist ferner aus der ebenfalls gattungsgemäßen EP B1 0409 944 ein Wischerträger bekannt, bei dem rohrförmige Teile einen Motorträger über formschlüssige Anschlüsse mit den Wischerlagern verbinden. In die im wesentlichen geraden rohrförmigen Teile sind geräuschdämpfende, frequenzfilternde oder geräuschabsorbierende Zwischenstücke eingesetzt, um Geräusche zu dämpfen, die vom Wischermotor über den Wischerträger auf die Wischerlager und dann auf die Karosserie des Fahrzeugs übertragen werden. Eine Variante zeigt, daß der rohrförmige Wischerträger in einem Bereich perforiert ist und mit einem geräuschabsorbierenden Material ausgefüllt bzw. ausgeschäumt ist. Bei all diesen Maßnahmen soll darauf geachtet werden, daß die Stabilität des Trägerrahmens nicht unzulässig herabgesetzt wird.

Es ist ferner aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstükken bekannt. Dieses Verfahren, das vor allem für die Kraftfahrzeugindustrie verwendet wird, arbeitet mit hohen Drücken. Das umzuformende Rohrstück wird in ein geteiltes Formwerkzeug gelegt, in das die gewünschte Werkstückform eingearbeitet ist. Das Formwerkzeug, das in einer Presse montiert ist, wird durch einen vertikal arbeitenden Pressenstößel geschlossen. Die Rohrstückenden werden durch Schließwerkzeuge geschlossen, durch die ein Druckmedium zugeführt wird, das die Rohrwandungen gegen die innere Werkzeugform preßt. Dabei wird von horizontal wirkenden Stößeln ein axialer Druck auf das Rohr aufgebracht, der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt. Gegenstand einer älteren Patentanmeldung ist es, ein solches Verfahren auch für die Herstellung eines rohrförmigen Wischerträgers mit unterschiedlichen Querschnittformen zu verwenden.

### Vorteile der Erfindung

Nach der Erfindung hat der Wischerträger zwischen der Motoraufnahme und dem Wischerlager einen in Längsrichtung elastisch nachgiebigen Bereich, der zweckmäßig dadurch gebildet wird, daß das Hohlprofil in diesem Bereich abwechselnd Abschnitte mit einem kleineren und einem größeren Durchmesser aufweist. Sollte sich hierdurch die Biegesteifigkeit des Wischerträgers verringern, so kann dies gemäß einer Ausgestaltung der Erfindung dadurch ausgeglichen werden, daß der mittlere Durchmesser in dem elastisch nachgiebigen Bereich gegenüber einem Durchmesser in den benachbarten Bereichen vergrößert ist. Als mittlerer Durchmesser wird das arithmetische Mittel zwischen dem größeren und kleineren Durchmesser angesehen. Hierbei ist es wesentlich, daß das für die Biegesteifigkeit entscheidende Widerstandsmoment durch eine vergrößerte Außenkontur erhöht wird, ohne die für die axiale Elastizität maßgebliche Wandstärke zu vergrößern. Entsprechendes gilt auch für Rohrprofile mit einem unrunden Querschnitt.

Durch die Reduzierung der Steifigkeit in axialer Richtung wird die Spitzenbelastung im Wischerarm und Wischerlager im Blockier- und Schneelastfall verringert. Dies gilt vor allem im Bereich der Park- und Umkehrlage des Wischerarms bzw. der Streck- und Decklage zwischen der Kurbel des Wischermotors und einer Gelenkstange. Da die geringer beanspruchten Komponenten kleiner dimensioniert werden können, ergeben sich Kosten und Gewichtseinsparungen.

Nachteile, die sich möglicherweise durch eine geringere Biegesteifigkeit des axial elastisch nachgiebigen Bereichs ergeben könnten, können auch dadurch vermieden werden, daß dieser Bereich in einem Abschnitt des Hohlprofils angeordnet ist, der nur wenig auf Biegung beansprucht wird. Solche Bereiche werden von geraden Abschnitten des Hohlprofils gebildet, die im wesentlichen parallel zu einer Gelenkstange verlaufen und somit vor allem Zug- und Druckkräfte aufnehmen.

In der Regel wird man zu beiden Seiten des Wischermotors elastisch nachgiebige Bereiche vorsehen. Häufig wird es aber genügen, einen axial elastischen Bereich nur auf der Beifahrerseite des Wischermotors anzuordnen. Hierdurch wird erreicht, daß durch die axiale Elastizität die Wischqualität auf der Fahrerseite nicht beeinträchtigt wird und trotzdem die Bauelemente weitgehend gegen Überlastung geschützt sind.

Die unterschiedlichen Durchmesser können zweckmäßigerweise durch einen Preßvorgang oder durch ein Innenhochdruck-Umformverfahren hergestellt werden. Während durch Pressen im allgemeinen nur Vertiefungen eingebracht werden können, durch die der mittlere Durchmesser in diesem Bereich verkleinert wird, kann durch das Innenhochdruck-Umformverfahren der Durchmesser des Hochprofils aufgeweitet werden, so daß das Hohlprofil des Wischerträgers im Bereich der wechselnden Durchmesser aufgeweitet werden kann und somit ein höheres Widerstandsmoment bei gleichzeitig größerer axialer Elastizität erhält.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

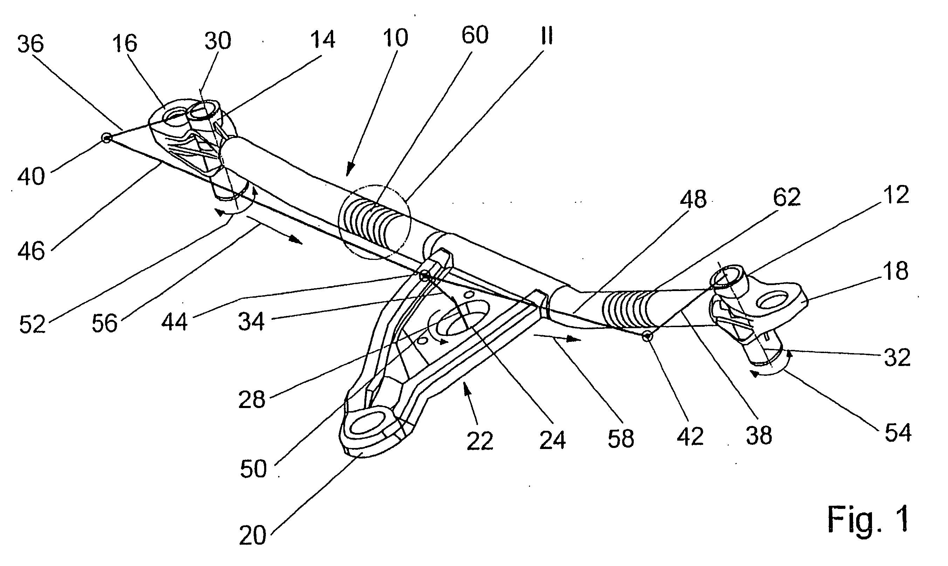

- Fig. 1: eine perspektivische Ansicht eines Wischerträgers,
- Fig. 2: einen vergrößerten Längsschnitt eines in Längsrichtung elastisch nachgiebigen Bereichs II in Fig. 1,
- Fig. 3: eine Variante zu Fig. 2,
- Fig. 4: eine Variante zu Fig. 3,
- Fig. 5: einen Teilschnitt durch ein geöffnetes Preßwerkzeug zur Herstellung eines elastisch nachgiebigen Bereichs,
- Fig. 6: einen Teilschnitt durch ein geschlossenes Preßwerkzeug nach Fig. 5,
- Fig. 7: einen Teilschnitt durch ein geöffnetes Formwerkzeug zur Herstellung eines elastisch nachgiebigen Bereichs im Innenhochdruck-Umformverfahren und
- Fig. 8: einen Teilschnitt durch ein geschlossenes Formwerkzeug nach Fig. 7.

### Beschreibung der Ausführungsbeispiele

Ein Wischerträger 10, in einer Ausführung mit Hohlprofilen 64, 72, 74, auch Rohrplatine oder Rohrrahmen genannt, verbindet zwei an seinen Enden befestigte Wischerlager 12, 14 und einen dazwischen angeordneten Motorträger 22. An den Wischerlagern 12, 14 und am Motorträger 22 sind Befestigungsaugen 16, 18, 20 vorgesehen, mit denen der Wischerträger 10 an einer nicht näher dargestellten Karosserie eines Fahrzeugs befestigt wird.

Ein Wischerantrieb, der im wesentlichen aus einer Motorwelle 28, Kurbeln 34, 36, 38, Gelenkstangen 46, 48 und Antriebswellen 30, 32 für einen nicht dargestellten Scheibenwischer besteht, ist mit Strichen schematisch angedeutet. Ein Wischermotor, zu dem die Motorwelle 28 gehört, wird über eine Motoraufnahme 24 am Motorträger 22 gehalten und treibt über seine Motorwelle 28 und die Kurbel 34 die Gelenkstangen 46 und 48 an. Die Gelenkstangen 46 und 48 sind über ein Gelenk 44 mit der Kurbel 34 der Motorwelle 28 und über weitere Gelenke 40 und 42 an den anderen Enden mit der Kurbel 36 bzw. 38 verbunden, die an den Antriebswellen 30 und 32 befestigt sind. Die Drehrichtung 50 der Motorwelle 28 und die Schwenkrichtungen 52, 54 sind mit Pfeilen angezeigt.

Während der Wischbewegung des Scheibenwischers wirken auf die Gelenkstangen 46, 48 in Kraftrichtung 56 und 58 Zug- und Druckkräfte, die sich über den Wischerträger 10 abstützen. Wenn der Scheibenwischer durch Schneelast oder sonst wie blockiert, ergeben sich erhebliche Spitzenbelastungen, die von den Bauelementen, z.B. den Wischerlagern 12, 14 und den Antriebswellen 30, 32 angebrachten, nicht dargestellten Wischerarmen aufgenommen werden müssen. Diese sind entsprechend den zu erwartenden höchsten Belastungen stark zu dimensionieren. Um die Spitzenbelastungen abzubauen, sind axial elastisch nachgiebig Bereiche 60 und 62 zu beiden Seiten des Motorträgers 22 vorgesehen, die sich im Blockierfall axial elastisch verformen und somit die Spitzenbelastung reduzieren. Die axial elastisch nachgiebigen Bereiche 60 und 62 werden zweckmäßigerweise in geraden, durch Biegemomente gering belasteten Bereichen des Wischerträgers 10 angeordnet, die im wesentlichen parallel zu den Gelenkstangen 46, 48 verlaufen.

In der Regel sind zu beiden Seiten des Motorträgers 22 die elastischen Bereiche 60 und 62 vorgesehen. In vielen Fällen wird aber ein elastischer Bereich 60 auf einer Seite des Motorträgers 22 ausreichen. Dieser Bereich sollte dann zweckmäßigerweise auf der Beifahrerseite des Fahrzeugs liegen, um eine Beeinträchtigung der Wischqualität im Normalbetrieb, die möglicherweise durch die größere Elastizität auftreten kann, auf der Fahrerseite des Fahrzeugs auszuschließen.

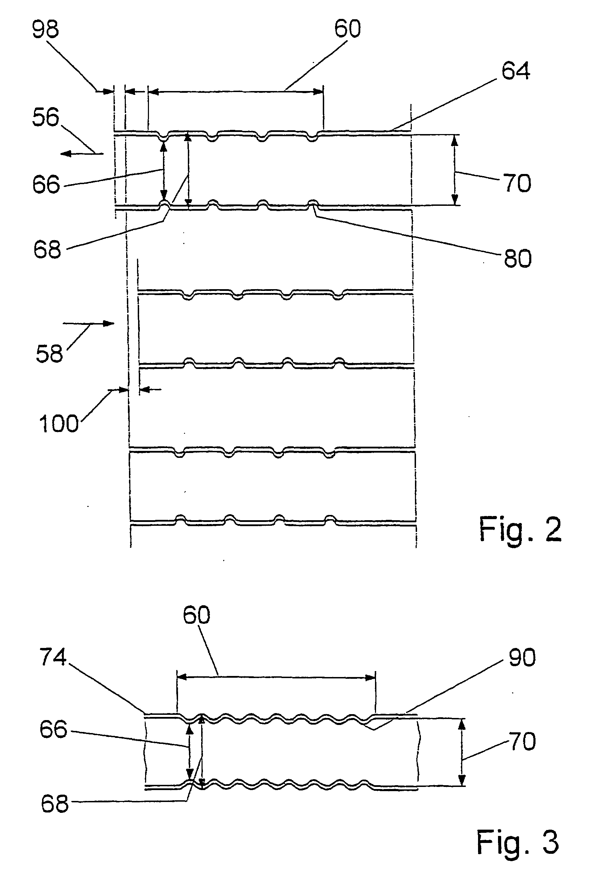

Fig. 2 zeigt ein Hohlprofil 64 mit dem elastisch axial nachgiebigen Bereich 60, in dem sich Abschnitte mit einem kleineren Durchmesser 66 mit Abschnitten mit einem größeren Durchmesser 68 abwechseln. Die Abschnitte mit dem kleineren Durchmesser 66 werden durch Sicken 80 gebildet, die in das Hohlprofil 64 eingepreßt sind. Die Abschnitte mit dem größeren Durchmesser 68 entsprechen dem Durchmesser 70 des benachbarten Bereichs, gegenüber dem der sich aus dem größeren Durchmesser 68 und dem kleineren Durchmesser 66 ergebende mittlere Durchmesser des elastischen Bereichs 60 reduziert ist. Der obere Teil von Fig. 2 zeigt wie sich der Bereich 60 unter Einwirkung einer Zugkraft 56 elastisch um eine Distanz 98 verlängert, während der mittlere Teil eine elastische Verkürzung um eine Distanz 100 unter dem Einfluß einer Druckkraft 58 darstellt. Der untere Teil zeigt den Bereich 60 lastfrei.

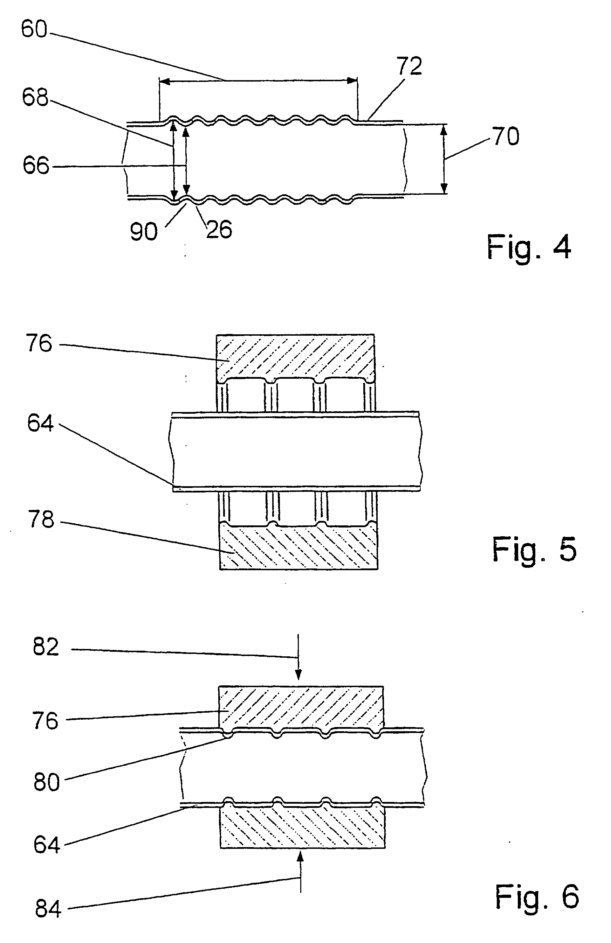

Bei den Ausführungen nach Fig. 3 und 4 sind die elastisch nachgiebigen Bereiche 60 durch ein Wellrohr gebildet, wobei Vertiefungen 90 ausgehend von einem Durchmesser 70 eingedrückt sind (Fig. 3) oder Erhebungen 26 nach außen ausgeformt sind (Fig. 4). Die Sicken 80 und die Vertiefungen 90 können in einfacher Weise durch ein Preßverfahren in die Hohlprofile 64, 74 eingebracht werden. Fig. 5 zeigt eine geöffnete Preßform mit einem oberen Preßwerkzeug 76 und einem unteren Preßwerkzeug 78. Unter Wirkung der Preßkräfte 82 und 84 wird das Preßwerkzeug 76, 78 geschlossen (Fig. 6) und die Sicken 80 in das Hohlprofil 64 eingeformt. In gleicher Weise kann auch ein Wellrohr mit einem entsprechenden Werkzeug hergestellt werden.

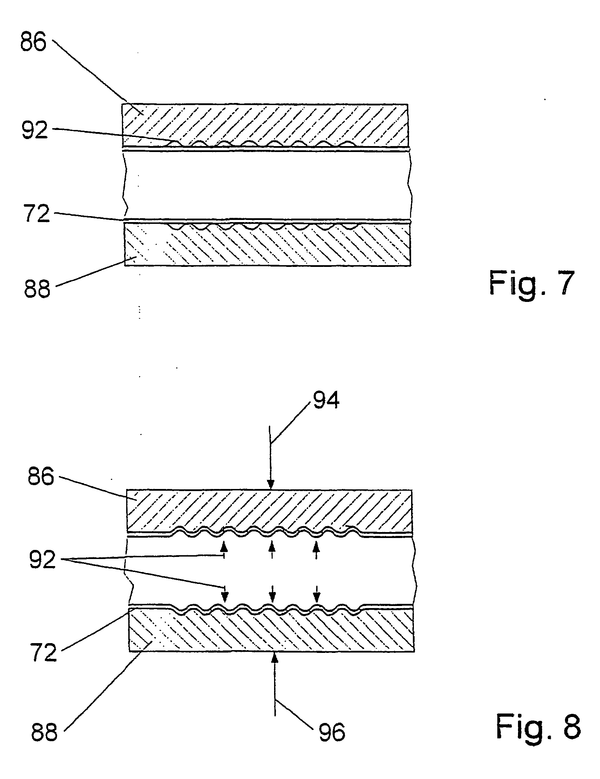

Sollen die Erhebungen 26 über den Durchmesser 70 des benachbarten Teils des Hohlprofils 72 hinausgehen, wird zweckmäßigerweise ein Innenhochdruck-Umformverfahren angewendet. Dabei wird das Hohlprofil 72 in ein Formwerkzeug 86, 88 eingelegt, dessen oberes Formwerkzeug 86 und unteres Formwerkzeug 88 durch Schließkräfte 94 und 96 geschlossen und anschließend geschlossen gehalten werden. Um das Formwerkzeug von innen durch Druckkräfte 92 auszuformen, wird das Hohlprofil 72 mit einem Druckmedium beaufschlagt (Fig. 8). Dadurch können in dem elastisch verformbaren Bereich Durchmesser 66, 68 erreicht werden, die einen größeren mittleren Durchmesser ergeben als der Durchmesser 70 in den benachbarten Bereichen ist, so daß ein höheres Widerstandsmoment mit einer größeren Biegesteifigkeit erreicht wird. Hierdurch kann die Biegesteifigkeit trotz einer größeren axialen Elastizität gleich gehalten oder sogar erhöht werden.

### Bezugszeichen

- 10: Wischerträger
- 12: Wischerlager
- 14: Wischerlager
- 16: Befestigungsauge
- 18: Befestigungsauge
- 20: Befestigungsauge
- 22: Motorträger
- 24: Motoraufnahme
- 26: Erhebung
- 28: Motorwelle
- 30: Antriebswelle
- 32: Antriebswelle
- 34: Kurbel
- 36: Kurbel
- 38: Kurbel
- 40: Gelenk
- 42: Gelenk
- 44: Gelenk
- 46: Gelenkstange
- 48: Gelenkstange
- 50: Drehrichtung
- 52: Schwenkrichtung
- 54: Schwenkrichtung
- 56: Kraftrichtung
- 58: Kraftrichtung
- 60: elastischer Bereich
- 62: elastischer Bereich
- 64: Hohlprofil
- 66: kleiner Durchmesser
- 68: großer Durchmesser
- 70: Durchmesser
- 72: Hohlprofil
- 74: Hohlprofil
- 76: oberes Preßwerkzeug
- 78: unteres Preßwerkzeug
- 80: Sicke
- 82: Preßkraft
- 84: Preßkraft
- 86: oberes Formwerkzeug
- 88: unteres Formwerkzeug
- 90: Vertiefungen
- 92: Druckkraft
- 94: Schließkraft
- 96: Schließkraft
- 98: Distanz
- 100: Distanz

## Patentansprüche

1. Wischerträger (10) mit einem Hohlprofil (64, 72, 74) zum Befestigen eines Wischermotors über eine Motoraufnahme (24) sowie mindestens eines Wischerlagers (12, 14) für einen Scheibenwischer an einer Fahrzeugkarosserie, **dadurch gekennzeichnet, daß** zwischen der Motoraufnahme (24) und dem Wischerlager (12, 14) ein in Längsrichtung elastisch nachgiebiger Bereich (60, 62) angeordnet ist.

2. Wischerträger (10) nach Anspruch 1, **dadurch gekennzeichnet, daß** das Hohlprofil (64, 72, 74) in dem Bereich (60, 62) abwechselnd Abschnitte mit einem kleineren (66) und einem größeren Durchmesser (68) aufweist.

3. Wischerträger (10) nach einem der Ansprüche 1 oder 2 **dadurch gekennzeichnet, daß** eine durch die wechselnden Durchmesser (66, 68) verringerte Biegesteifigkeit durch einen mittleren Durchmesser in dem elastisch nachgiebigen Bereich (60, 62) ausgeglichen ist, der gegenüber einem Durchmesser (70) in den benachbarten Bereichen vergrößert ist.

4. Wischerträger (10) nach einem der vorhergehenden Ansprüche, **dadurch gekennzeichnet, daß** zu beiden Seiten der Motoraufnahme (24) ein Wischerlager (12, 14) und ein elastisch nachgiebiger Bereich (60, 62) vorgesehen sind.

5. Wischerträger (10) nach einem der Ansprüche 1 bis 3, **dadurch gekennzeichnet, daß** zu beiden Seiten der Motoraufnahme (24) ein Wischerlager (12, 14) angeordnet ist, aber nur an der Beifahrerseite ein elastisch nachgiebiger Bereich (62) vorgesehen ist.

6. Wischerträger (10) nach einem der vorhergehenden Ansprüche, **dadurch gekennzeichnet, daß** der nachgiebige Bereich in einem Abschnitt des Hohlprofils (64, 72, 74) angeordnet ist, der nur wenig auf Biegung beansprucht wird.

7. Wischerträger (10) nach Anspruch 6, **dadurch gekennzeichnet, daß** der nachgiebige Bereich (60, 62) in einem geraden Abschnitt des Hohlprofils (64, 72, 74) angeordnet ist, der im wesentlichen parallel zu einer Gelenkstange (46, 48) verläuft.

8. Wischerträger (10) nach einem der vorhergehenden Ansprüche, **dadurch gekennzeichnet, daß** das Hohlprofil (64, 72, 74) in dem elastisch nachgiebigen Bereich (60, 62) durch Pressen verformt ist.

9. Wischerträger (10) nach einem der Ansprüche 1 bis 7, **dadurch gekennzeichnet, daß** das Hohlprofil (64, 72, 74) in dem elastisch nachgiebigen Bereich (60, 62) durch ein Innenhochdruck-Umformverfahren hergestellt ist.

## Claims

1. Wiper support (10) having a hollow profile (64, 72, 74) for fastening a wiper motor, via a motor mount (24), and at least one wiper bearing (12, 14) for a window wiper to a vehicle body, **characterized in that** a region (60, 62) which is elastically flexible in the longitudinal direction is arranged between the motor mount (24) and the wiper bearing (12, 14).

2. Wiper support (10) according to Claim 1, **characterized in that** the hollow profile (64, 72, 74) has sections of a smaller diameter (66) and of a larger diameter (68) alternating in the region (60, 62).

3. Wiper support (10) according to either of Claims 1 and 2, **characterized in that** a flexural rigidity, which is reduced by the changing diameters (66, 68), is compensated for in the elastically flexible region (60, 62) by a mean diameter which is enlarged with respect to a diameter (70) in the adjacent regions.

4. Wiper support (10) according to one of the preceding claims, **characterized in that** a wiper bearing (12, 14) and an elastically flexible region (60, 62) are provided on both sides of the motor mount (24).

5. Wiper support (10) according to one of Claims 1 to 3, **characterized in that** a wiper bearing (12, 14) is arranged on both sides of the motor mount (24), but an elastically flexible region (62) is provided only on the front passenger side.

6. Wiper support (10) according to one of the preceding claims, **characterized in that** the flexible region is arranged in a section of the hollow profile (64, 72, 74) that is subjected only to a small extent to flexural stress.

7. Wiper support (10) according to Claim 6, **characterized in that** the flexible region (60, 62) is arranged in a rectilinear section of the hollow profile (64, 72, 74) that runs essentially parallel to an articulated rod (46, 48).

8. Wiper support (10) according to one of the preceding claims, **characterized in that** the hollow profile (64, 72, 74) is deformed in the elastically flexible region (60, 62) by pressing.

9. Wiper support (10) according to one of Claims 1 to 7, **characterized in that** the hollow profile (64, 72, 74) is produced in the elastically flexible region (60, 62) by an internal high-pressure forming process.

## Revendications

1. Support d'essuie-glace (10) comprenant un profil creux (64, 72, 74) pour la fixation d'un moteur d'essuie-glace sur le logement de moteur (24) et d'au moins un palier d'essuie-glace (12, 14) pour un dispositif d'essuie-glace sur une carrosserie de véhicule,
**caractérisé en ce que**
entre le logement du moteur (24) et le palier d'essuie-glace (12, 14), une région fléchissante élastiquement (60, 62) dans la direction longitudinale est prévue.

2. Support d'essuie-glace (10) selon la revendication 1,
**caractérisé en ce que**
le profil creux (64, 72, 74) présente dans la région (60, 62) des parties qui alternent entre un diamètre plus petit (66) et plus grand (68).

3. Support d'essuie-glace (10) selon l'une des revendications 1 ou 2,
**caractérisé en ce que**
une rigidité à la flexion réduite par les diamètres alternés (66, 68) est compensée dans la région fléchissante élastiquement (60, 62) par un diamètre moyen agrandi par rapport à un diamètre (70) dans la région voisine.

4. Support d'essuie-glace (10) selon l'une des revendications précédentes,
**caractérisé en ce qu'**
un palier d'essuie-glace (12, 14) et une région fléchissante élastiquement (60, 62) sont prévues des deux côtés de l'admission du moteur (24).

5. Support d'essuie-glace (10) selon l'une des revendications 1 à 3,
**caractérisé en ce que**
un palier d'essuie-glace (12, 14) est disposé des deux côtés du logement du moteur (24), mais il n'est prévu une région fléchissante élastiquement (62) que du côté passager.

6. Support d'essuie-glace (10) selon l'une des revendications précédentes,
**caractérisé en ce que**
la région fléchissante est disposée dans une partie du profil creux (64, 72, 74) qui n'est soumise qu'à de faibles sollicitations à la flexion.

7. Support d'essuie-glace (10) selon la revendication 6,
**caractérisé en ce que**
la région fléchissante (60, 62) est disposée dans une partie droite du profil creux (64, 72, 74) qui s'étend essentiellement parallèlement à une barre articulée (46, 48).

8. Support d'essuie-glace (10) selon l'une des revendications précédentes,
**caractérisé en ce que**
le profil creux (64, 72, 74) est déformé par compression dans la région fléchissante élastiquement (60, 62).

9. Support d'essuie-glace (10) selon l'une des revendications 1 à 7,
**caractérisé en ce que**
le profil creux (64, 72, 74) est fabriqué au moyen d'un procédé de transformation sous haute pression interne dans la région fléchissante élastiquement (60, 62).
